# EUROPEAN PATENT APPLICATION

(11) **EP 1 455 461 A1**
(43) Date of publication of application: **08.09.2004**
(21) Application number: 03290502.8
(22) Date of filing: 03.03.2003
(51) Int. Cl.: H04B 1/69

(54) **Method for processing ultra wide band signals in wireless system, and corresponding device**

(71) Applicant: STMicroelectronics N.V., 1077 XX Amsterdam (NL)
(72) Inventor: Cattaneo Chiara, 01630 Sergy (FR)
(74) Representative: Zapalowicz, Francis

(57) **Abstract**

After the system has been coarsely synchronized (40) with the channel on a super-frame level, a same training sequence is used for performing simultaneously on a frame level a channel estimation and a frame synchronization (43).

## Description

The invention relates to the field of communications, and more particularly to the Ultra Wide Band (UWB) radio technology.

An application of the invention is for example the wireless personal area networks (WPAN) which are used to convey information over a relatively short distance among a relatively few participants.

An example of the wireless personal area network is a so-called "piconet" which is a wireless data communications system which allows a number of independent data devices to communicate with each other. A "piconet" is distinguished from other types of data networks in that communications are normally confined to a person or object that typically covers about 10 meters in all directions and envelops the person or a thing whether stationary or in motion.

Ultra Wide Band radio technology departs from conventional narrow band radio and spread-spectrum technologies in that the bandwidth of the signal at -10dB is typically greater than 20% of the center frequency.

Further, instead of transmitting a continuous carrier wave modulated with information or with information combined with a spread code, which determines the bandwidth of the signal, a UWB radio transmits a series of very narrow impulses. For example, these impulses can take the form of a single cycle, or monocycle, having pulse widths less than 1 ns. These short time-domain impulses transformed into the frequency domain results in the ultra wide band spectrum of UWB radio.

In the UWB radio technology, the information conveyed on the signal, can be coded by a pulse position modulation (PPM). In other words, information coding is performed by altering the timing of the individual pulses. More precisely, the series of impulses is transmitted at a repetition rate of up to several Megahertz. Each pulse is transmitted within a window having a predetermined length (pulse repetition peirod), for example 50 ns. With respect to a nominal position, the pulse is in a early position or in a late position, which permits to encode a "0" or a "1". It is also possible to encode more than two values by using more than two positions shifted with respect to the nominal position. It is also possible to super impose a modulation of the BPSK type on this position modulation.

The IEEE 802.15.3 MAC standard defines the wireless medium access control specifications for high rate wireless personal area networks (WPAN) in a narrow band radio technology.

However, up to now, no document defines the specification of a wireless data communication system, for example a wireless personal area network, using the UWB radio technology, and more particularly the fine synchronization between two independent data devices of such a network communicating with each other within allocated frames of a super frames structure.

The invention intends to provide a solution to this problem.

As claimed, the invention proposes a method of processing an incident pulsed signal of the ultra wide band type, received from a channel by an independent data device of a wireless data communication system, in particular a wireless personal area network type, for example of the piconet type.

Said incident signal carries information within a super frame structure. Each super frame includes several frames respectively allocated to communications between specific pairs of independent data devices of the system, and a head part, also called "beacon", containing at least a first training sequence.

Further, each frame includes a preamble containing at least a second training sequence.

Said method comprises
- upon reception of each super frame, a step of cell synchronization including a coarse synchronization with another independent data device acting as a coordinator device of the system, said coarse synchronization using said first training sequence, and
- upon reception of each frame allocated to said independent data device within said super frame, a step of channel estimation using said second training sequence and based on at least one signal slice having ends temporally defined with respect to the result of the coarse synchronization for recovering all the channel energy,
whereby said step of channel estimation performs also simultaneously a frame synchronization.

Although two devices are synchronized to the coordinator at the end of the cell synchronization step, they must be also synchronized to each other at the frame level. As a matter of fact, in the meantime between the synchronization to the coordinator and the beginning of a frame allocated to an independent device, a relatively large amount of time may have passed and the independent devices may have evolved (movement of the independent devices, of the environment, ...). Furthermore, the two independent devices may not know their relative position and thus the propagation time between the two devices may be unknown prior to the beginning of the frame allocated to their communication.

According to the invention, this necessary frame synchronization is performed at the frame level, simultaneously with the channel estimation, by using a same training sequence. In other words, the second training sequence is used for performing both a channel estimation and a frame synchronization.

Thus, because the channel estimation algorithm performs also a frame synchronization, that means that at the beginning of each frame, it is not necessary to perform a specific synchronization algorithm. In other words, the channel estimation algorithm is an algorithm of frame synchronization and channel estimation joined.

According to an embodiment of the invention, wherein said channel has a predetermined maximum length, and the beacon further contains a time of arrival indication for each frame, and wherein said coarse synchronization delivers a first delay information corresponding to the delay between the received incident signal and the transmitted signal, said step of channel estimation begins on a signal slice starting at an instant equal to the time of arrival of said frame increased with the difference between said first delay information and a predetermined offset. Further said signal slice has a size equal to the maximum channel length increased with said predetermined offset.

The first delay information corresponds to the position of a peak detected during the coarse synchronization. Nevertheless, it is possible that this detected peak is not the first peak of the received channel response. Thus, when the channel is a multipath channel, said predetermined offset comprises preferably a first offset taking into account the fact that said first delay information is associated with a path of said channel which can be different from the first path.

Statistical results lead for example the value of this first offset to around 10 ns. That means that the position of the detected peak during the coarse synchronization is always within the first 10 ns of the channel response.

An other effect can lead to adjust the position and the length of the signal slice. This second effect is the propagation delay. More precisely, during the coarse synchronization, all devices perform the synchronization with the coordinator, which is the device sending the beacon. But, each frame is dedicated to communication between a specific pair of devices, and the propagation delay between these two devices is normally different from the delay propagation between the coordinator and the considered devices.

And, it has been observed that the maximum difference between the propagation delays depends on the maximum distance between devices. For example, one meter distance corresponds to 3 ns of propagation delay.

In a WPAN UWB system, the maximum distance considered is for example 10 meters, so that the second offset of the predetermined offset, taking into account the differences between the propagation delays between the coordinator and an independent data device, and between a pair of independent data devices, can be set to about 30 ns.

Generally, said predetermined offset can be the sum of said first and second offsets.

Further, said first training sequence and said second training sequence may be different or identical.

Although the coarse synchronization and the step of channel estimation can be performed by several ways, for example by using analog maximum likelihood correlation, said coarse synchronization and said step of channel estimation comprise advantageously digital correlation, for example digital sliding correlation.

More precisely, according to a preferred embodiment, the second training sequence is a dedicated pulsed train having a pulse repetition period and the correlation step performed during the channel estimation step comprises coherent integration of successive signal slices having the same size and mutually temporally shifted with said pulse repetition period.

The invention proposes also an independent data device of a wireless data communications system, for example of the WPAN type, comprising
- reception means for receiving an incident pulsed signal of the ultra wide band type from a channel, said incident signal carrying information within a super-frame structure, each super-frame including several frames respectively allocated to communications between specific pairs of independent data devices of the system and a head part or beacon containing at least a first training sequence, each frame including a preamble containing at least a second training sequence, and
- processing means including
   - coarse synchronization means for performing upon reception of each super-frame, a coarse synchronization with another independent data device acting as a coordinator device of the system, said coarse synchronization using said first training sequence, and
   - channel estimation means for performing upon reception of each frame allocated to said independent data device within said super-frame, a step of channel estimation using said second training sequence and based on at least one signal slice having ends temporally defined with respect to the result of the coarse synchronization for recovering all the channel energy,
   whereby said channel estimation means are adapted to perform simultaneously said channel estimation and a frame synchronization.

According to an embodiment of the invention wherein said channel has a predetermined maximum length, and the beacon further contains a time of arrival indication for each frame, said coarse synchronization means delivers a first delay information corresponding to the delay between the received incident signal and the transmitted signal. And Channel estimation means are adapted to begin said step of channel estimation at a starting instant equal to the time of arrival of said frame increased with the difference between said first delay information and a predetermined offset, on a signal slice having a size equal to the maximum channel length increased with said predetermined offset.

When said channel is a multipath channel, said predetermined offset may comprise a first offset taking into account the fact that said first delay information is associated with a path of said channel which can be different from the first path.

Said predetermined offset may also comprise a second offset taking into account the differences between the propagation delays between the coordinator and a independent data device and between a pair of independent data devices.

Said second offset depends for example on the maximum distance between two independent data devices of the system.

According to an embodiment of the invention, said coarse synchronization means and/or said channel estimation means comprise digital correlation means.

For example, when the second training sequence is a dedicated pulse train having a pulse repetition period, the correlation means comprises preferably coherent integration means for performing during the channel estimation step, coherent integration of successive signal slices having the same size and mutually temporally shifted with said pulse repetition period.

Other advantages and features of the invention will appear on examining the detailed description of embodiments, these being in no way limiting and of the appended drawings in which;
- figure 1 shows diagrammatically an architecture of a wireless personal area network according to the invention,
- figure 2 shows diagrammatically a super frame structure according to the invention,
- figure 3 shows diagrammatically an internal architecture of an independent data device according to the invention,
- figure 4 shows diagrammatically an embodiment of a method according to the invention,
- figure 5 shows diagrammatically an example of a received signal resulting from the transmission of a training sequence during the coarse synchronization, and,
- figure 6 shows diagrammatically an example of coherent integration used during a channel estimation according to the invention.

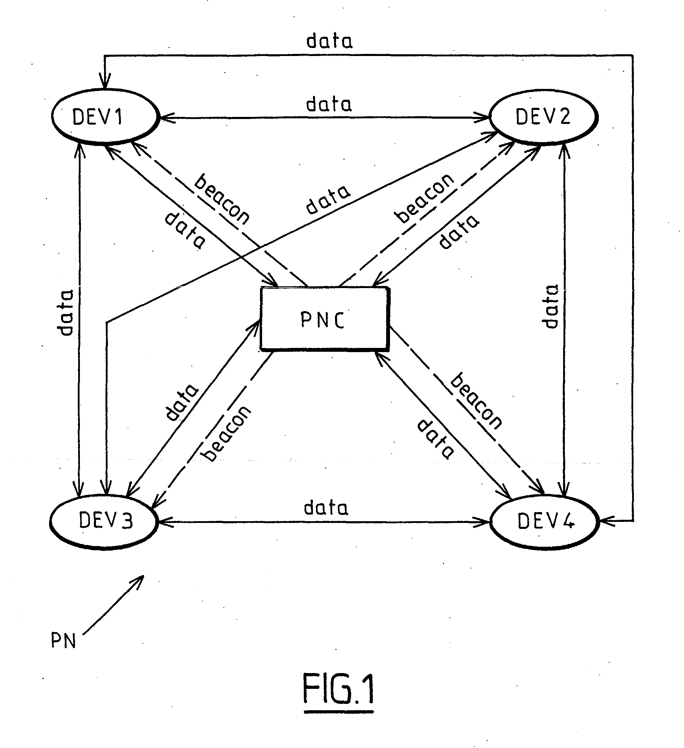

Figure 1 shows a wireless communication system PN, such as a wireless a personal area network. This network of wireless communication system is for example so-called piconet which allows a number of independent data devices DEVi to communicate with each other.

A piconet is distinguished from other types of data networks in that communications are normally confined to a person or object that typically covers about 10 meters in all directions and envelops the person or thing whether stationary or in motion.

A piconet is in contrast to local area network (LAN), metropolitan area network (MAN), and wide area network (WAN) which cover a large geographic area, such as a single building or a campus or that would interconnect facilities in different parts of a country or of the world.

The basic component of a piconet is a data independent device DEV. Such an independent data may be for example a personal computer or the like.

One independent data device DEV is required to assume the role of the piconet coordinator PNC.

The coordinator PNC provides the basic timing for the piconet with a so-called "beacon" which is a part of a super frame as it will be explained more in details thereafter.

The PNC can communicate with the independent data devices DEVi. Further, two independent data devices can communicate with each other.

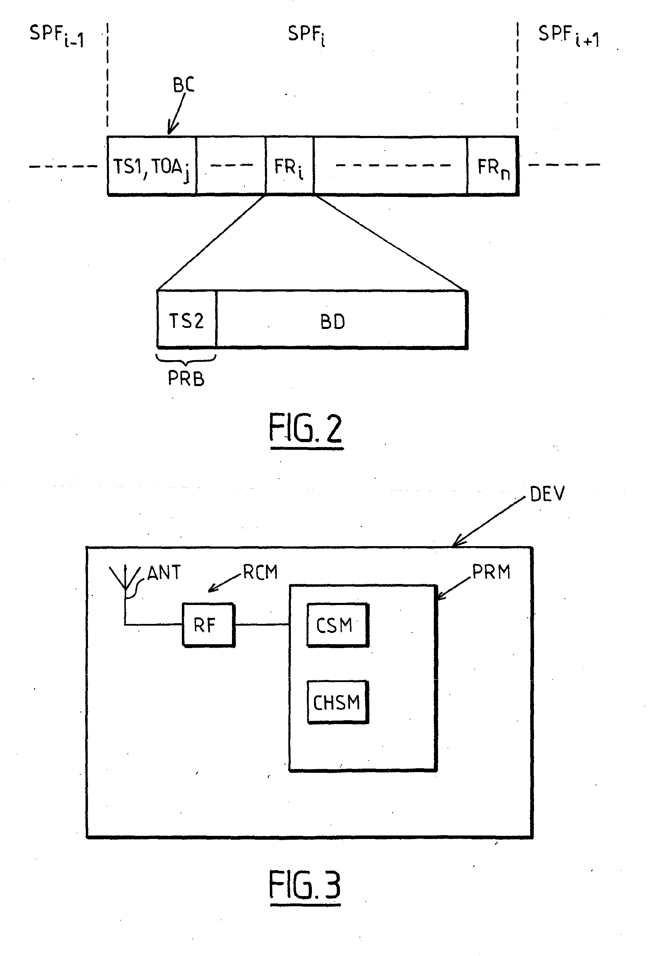

Figure 2 depicts a super frame structure used in the present invention for the communication between the coordinator PNC and the data devices DEV, as well as for the communication between two independent data devices.

The incident signal received from a channel by an independent data device DEV carries information within a super frame structure.

Each super frame SPFᵢ includes several frames _{FRi}respectively allocated to communications between specific pairs of independent data devices DEV.

Further, each super frame includes a head part, also called beacon, BC. The beacon contains at least a first training sequence TS1 as well as a time of arrival indication TOAⱼ for each frame FRⱼ.

Further, each frame FRᵢ includes a preamble PRB containing at least a second training sequence TS2, and a body part BD containing the useful data.

As illustrated in figure 3, an independent data device DEV basically comprises reception means RCM followed by processing means PRM.

More precisely, reception means comprises antenna ANT means followed by a conventional front end radio frequency stage.

The processing means PRM, for example realized by software within a processor, comprises coarse synchronization means CSM and channel estimation means CHSM.

When an independent data device DEV is turned on, it will first search for an existing piconet in its neighborhood, and then synchronize to its coordinator PNC. This operation is named "cell synchronization", or DEV-to-PNC synchronization.

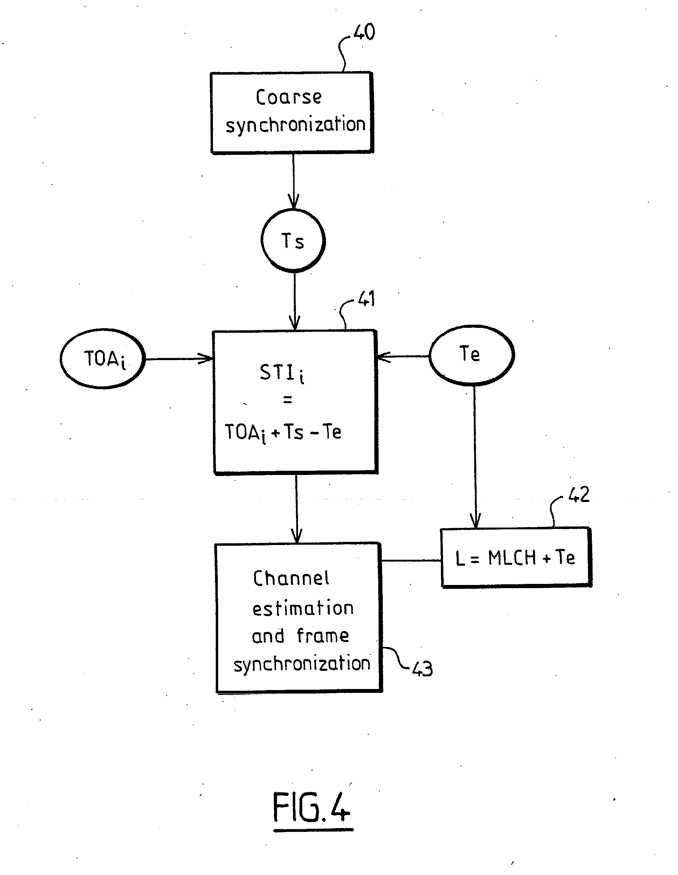

The cell synchronization operation can be subdivided in three distinct phases:
- the coarse synchronization (step 40 in figure 4),
- the fine synchronization,
- the clock synchronization.

During the coarse synchronization, the independent data device DEV is looking for the training sequence TS1 sent by the coordinator PNC. This coarse synchronization is further divided in two subphases :
- the detection of the training sequence,
- the alignment to the coordinator's super frame.

The goal of the detection subphase is to correlate the sent sequence with an *a priori* known sequence (among for example N possible sequences). The training sequence, which is for example a multiple repetition of a smaller sequence, is contained in the beacon.

The coarse synchronization 40 provides a first delay information Ts corresponding to the delay between the received incident signal and the transmitted signal.

Practically, the coarse synchronization can be made by using digital correlation, for example digital sliding correlation. Such digital sliding correlation are well known per se by the man skilled in the art. The output of the correlation is then compared with a threshold, which practically has a great value for avoiding false detection, for detecting a peak of the signal.

The sliding correlation can also comprise coherent integrations, which are also well known per se by the man skilled in the art. These coherent integrations use a window of samples, the length thereof being the size of the signal slice considered during coherent integrations. This window length corresponds for example to the size of a buffer needed in a hardware implementation.

And, the first delay information Ts represents the offset between the absolute reference of the system (initial position of the buffer) and the position of a peak detected by the coarse synchronization.

The alignment to the coordinator super frame consists in finding the end of the training sequence and in correcting the eventual offset between the coordinator's clock reference and the clock reference in the independent data device.

During the fine synchronization, the independent data device synchronizes precisely to the beginning of the beacon body which contains for example the different indications TOAⱼ, to be sent by the coordinator to all independent data devices DEV of the piconet.

The clock synchronization consists of identifying an eventual drift between the coordinator's clock and the independent data device clock.

Assuming now that independent data device DEV2 will communicate with independent data device DEV1, the coordinator PNC will send out information about the allocation of the different time slots (frames) of the super frame. This information TOAⱼ is contained, for example, in the beacon body. Independent data device DEV1 will hear that it will receive information from independent data device DEV2 during, for example, frame FR3, and that the training sequence sent by independent data device DEV2 in the frame preamble will be TS2.

The independent data device DEV1 can go to sleep until this frame FR3, and then wake up.

At this instant, a frame synchronization is required from independent data device DEV1. In other words, independent data device DEV1 has to synchronize with the independent data device DEV2 it will listen to.

Once DEV1's clock is synchronized to DEV2's clock, which occurs at the end of the preamble PRB of frame FR3, the independent data device DEV1 can start to demodulate the data contained in the frame sent by device DEV2.

Further to the frame synchronization performed on frame level, a channel estimation is also necessary to evaluate the channel response template and determine the coefficients of the impulse response of the channel.

And, according to the invention, both frame synchronization and channel estimation are made simultaneously on frame level, and more precisely at the beginning of the frame, by using the same training sequence TS2 sent by an independent data device, for example in the present case by the independent data device DEV2 which communicates with independent data device DEV1.

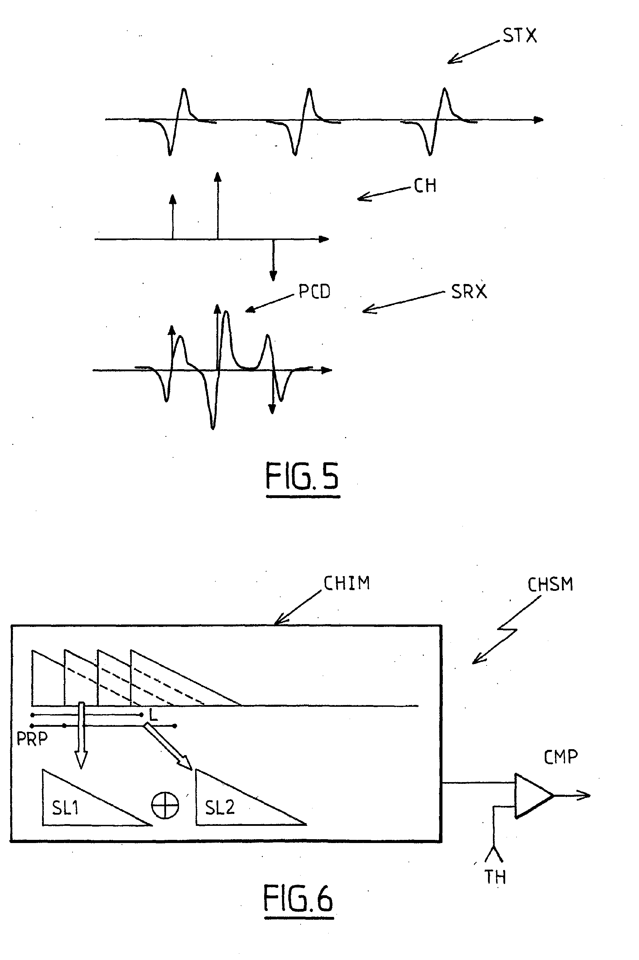

Both channel estimation and frame synchronization 43 (figure 4) are made by a channel estimation algorithm CHSM implemented in the processor PRM. More precisely, in the present example, the channel estimation means CHSM comprises coherent integration means CHIM (figure 6) which perform digital coherent integration.

The training sequence TS2 used by the channel estimation means CHSM is a dedicated UWB pulse train having a pulse repetition period PRP which is for example equal to 20 ns.

As diagrammatically illustrated in figure 6, the coherent integration means CHIM are adapted to sum N times, slices Slᵢ of the received signal. Each slice has a length L and two successive slices are mutually shifted by the PRP period.

The length of the training sequence is equal to N x PRP. The number N of coherent integrations has to be the smallest that permits to obtain good performances. A value around 64 is for example an optimum value.

Although it is possible to use as training sequence, successive UWB pulses respectively located at the same position within successive pulse repetition periods, the training sequence can be coded in order to avoid the spectral rays and to minimize the effect of the interferences from other piconets. For example, a well known time hopping code can increase the performances of the system without increasing the complexity. As it is well known by the man skilled in the art, when using a time hopping, the positions of the successive pulses of the training sequence within the successive pulse repetition periods, are different. One can also note that it is not necessary to use a pulse position modulation for a training sequence because no useful logic data are in fact transmitted within this training sequence.

Of course, when a time hopping code is used, it must be taken into consideration in the coherent integration before adding the successive signal slices.

After eventually a power optimization, the result of the coherent integration is compared with a predetermined threshold TH in comparison means CMP, in order to cancel noise. The output of the comparator means CMP gives the result of the channel estimation as well as the frame synchronization.

However, in order to recover all the channel energy, and thereby performing a fine frame synchronization, the ends of the signal slices have to be properly defined.

The coarse synchronization performed at the super frame beginning, provides the first delay information Ts and this first delay information Ts together with the time of arrival indication TOAᵢ of the frame _{FRi}gives a first information about this frame synchronization.

As mentioned before, Ts represents the offset between the absolute reference of the system (initial position of the buffer) and the position of the peak detected by coarse synchronization. Nevertheless, it is possible that the detected peak is not the first peak of the received channel response. This is for example illustrated in figure 5.

In this figure, the channel CH is assumed to be a multipath channel having three paths. STX refers to the transmitted signal whereas SRX refers to the received signal. And, for example, the peak PCD of the received signal SRX, which is detected during the coarse synchronization, can be for example the second peak corresponding to the second path of the channel.

Thus, for recovering all channel energy, the step 43 of channel estimation begins on a signal slice starting at an instant STIᵢ equal to the time of arrival TOAᵢ of the frame _{FRi}increased with the difference (Ts-Te) between the first delay information Ts and a predetermined offset Te (step 41, figure 4).

More precisely, the predetermined offset Te is in fact here the sum of a first offset and a second offset.

The first offset takes into account the fact that the first delay information Ts is associated with a path of the channel which can be different from the first path.

Statistical results lead the value of this first offset to 10 ns. That means that the position of the detected peak during the coarse synchronization is always within the first 10 ns of the channel response.

The second offset takes into account the differences between the propagation delays. Actually, during the coarse synchronization, all devices perform the synchronization with the coordinator PNC, which is the device sending the beacon. However, on the frame level, each frame is dedicated to a communication between a specific pair of devices and the propagation delay between these two devices is normally different from the delay propagation between the coordinator and the considered device.

The maximum differences between the propagation delays depend on the maximum distance between independent data devices. For example, 1 meter distance corresponds to 3 ns of propagation delay.

As in WPAN UWB system of the piconet type, the maximum distance considered is for example 10 meters, so the second offset can be equal to about 30 ns.

Consequently, an acceptable value or the predetermined offset Te is about 40 ns.

Another parameter allowing to recover all the channel energy is the window length, i.e. the size of each signal slice. More precisely, this length L can be equal to the sum of said predetermined offset Te and the maximum channel length MLCH, which can be assumed to be for example equal to 50 ns.

Accordingly, using a window length of L, placed firstly at the starting instant STIᵢ, the channel estimation algorithm performs also a frame synchronization. It is thus not necessary to embody a specific synchronization algorithm.

## Claims

1. Method of processing an incident pulsed signal of the ultra wide band type received from a channel by an independent data device (DEV) of a wireless data communications system, said incident signal carrying information within a super-frame structure, each super-frame (SPFᵢ) including several frames (FRᵢ) respectively allocated to communications between specific pairs of independent data devices of the system and a head part or beacon (BC) containing at least a first training sequence (TS1), each frame including a preamble (PRB) containing at least a second training sequence (TS2), said method comprising
upon reception of each super-frame, a step of cell synchronization including a coarse synchronization (40) with another independent data device acting as a coordinator device (PNC) of the system, said coarse synchronization using said first training sequence, and
upon reception of each frame allocated to said independent data device within said super-frame, a step of channel estimation (43) using said second training sequence and based on at least one signal slice having ends (STIᵢ,L) temporally defined with respect to the result of the coarse synchronization for recovering all the channel energy, whereby said step of channel estimation performs also simultaneously a frame synchronization.

2. Method according to claim 1, **characterized by** the fact that said channel (CH) has a predetermined maximum length, by the fact that the beacon (BC) further contains a time of arrival indication (TOAⱼ) for each frame (FR), by the fact that said coarse synchronization delivers a first delay information (Ts) corresponding to the delay between the received incident signal and the transmitted signal, and by the fact that said step of channel estimation (43) begins on a signal slice (SL) starting at an instant (Stᵢ) equal to the time of arrival (TOAᵢ) of said frame (FRᵢ) increased with the difference (Ts-Te) between said first delay information (Ts) and a predetermined offset (Te), and having a size (L) equal to the maximum channel length (MLCH) increased with said predetermined offset (Te).

3. Method according to claim 2, **characterized by** the fact that said channel is a multipath channel, and said predetermined offset (Te) comprises a first offset taking into account the fact that said first delay information is associated with a path of said channel which can be different from the first path.

4. Method according to claim 3, **characterized by** the fact that said first offset is equal to about 10 ns.

5. Method according to any one of the preceding claims, **characterized by** the fact that said predetermined offset (Te) comprises a second offset taking into account the differences between the propagation delays between the coordinator and an independent data device and between a pair of independent data devices.

6. Method according to claim 5, **characterized by** the fact that said second offset depends on the maximum distance between two independent data devices of the system.

7. Method according to claim 6, **characterized by** the fact that said second offset is equal to about 30 ns.

8. Method according to claim 3 or 4 and any one of claims 5 to 7, **characterized by** the fact that said predetermined offset (Te) is the sum of said first and second offsets.

9. Method according to any one of the preceding claims, **characterized by** the fact that said first training sequence (TS1) is identical to said second training sequence (TS2).

10. Method according to any one of claims 1 to 9, **characterized by** the fact that said coarse synchronization and said step of channel estimation (43) comprise digital correlation.

11. Method according to claim 10, **characterized by** the fact that the second training sequence (TS2) is a dedicated pulse train having a pulse repetition period, by the fact that the correlation step performed during the channel estimation step comprises coherent integration of successive signal slices having the same size and mutually temporally shifted with said pulse repetition period.

12. Method according to any one of the preceding claims, **characterized by** the fact that said wireless data communication system is of the WPAN type, for example of the "piconet" type.

13. Independent data device of a wireless data communications system, comprising
- reception means (RCM) for receiving an incident pulsed signal of the ultra wide band type from a channel, said incident signal carrying information within a super-frame structure, each super-frame including several frames respectively allocated to communications between specific pairs of independent data devices of the system and a head part or beacon containing at least a first training sequence, each frame including a preamble containing at least a second training sequence, and
- processing means (PRM) including
• coarse synchronization means (CSM) for performing upon reception of each super-frame, a coarse synchronization with another independent data device acting as a coordinator device of the system, said coarse synchronization using said first training sequence, and
• channel estimation means (CHSM) for performing upon reception of each frame allocated to said independent data device within said super-frame, a step of channel estimation using said second training sequence and based on at least one signal slice having ends temporally defined with respect to the result of the coarse synchronization for recovering all the channel energy,
whereby said channel estimation means are adapted to perform simultaneously said channel estimation and a frame synchronization.

14. Device according to claim 13, **characterized by** the fact that said channel has a predetermined maximum length, by the fact that the beacon (BC) further contains a time of arrival indication for each frame, by the fact that said coarse synchronization means delivers a first delay information corresponding to the delay between the received incident signal and the transmitted signal, and by the fact that channel estimation means (CHSM) are adapted to begin said step of channel estimation at a starting instant equal to the time of arrival of said frame increased with the difference between said first delay information and a predetermined offset, on a signal slice having a size equal to the maximum channel length increased with said predetermined offset.

15. Device according to claim 14, **characterized by** the fact that said channel (CH) is a multipath channel, and said predetermined offset (Te) comprises a first offset taking into account the fact that said first delay information is associated with a path of said channel which can be different from the first path.

16. Device according to claim 15, **characterized by** the fact that said first offset is equal to about 10 ns.

17. Device according to any one of claims 13 to 16, **characterized by** the fact that said predetermined offset (Te) comprises a second offset taking into account the differences between the propagation delays between the coordinator and an independent data device and between a pair of independent data devices.

18. Device according to claim 17, **characterized by** the fact that said second offset depends on the maximum distance between two independent data devices of the system.

19. Device according to claim 18, **characterized by** the fact that said second offset is equal to about 30 ns.

20. Device according to claim 15 or 16 and any one of claims 17 to 19, **characterized by** the fact that said predetermined offset (Te) is the sum of said first and second offsets.

21. Device according to any one of claims 13 to 20, **characterized by** the fact that said first training sequence is identical to said second training sequence.

22. Device according to any one of claims 13 to 21, **characterized by** the fact that said coarse synchronization means (CSM) and/or said channel estimation means (CHSM) comprise digital correlation means.

23. Device according to claim 22, **characterized by** the fact that the second training sequence is a dedicated pulse train having a pulse repetition period, by the fact that the correlation means comprises coherent integration means (CHIM) for performing during the channel estimation step, coherent integration of successive signal slices having the same size and mutually temporally shifted with said pulse repetition period.

24. Device according to any one of claim 13 to 23, **characterized by** the fact that said wireless data communication system is of the WPAN type, for example of the "piconet" type.
